# EUROPÄISCHE PATENTSCHRIFT

(11) **EP 0 869 041 B1**
(45) Veröffentlichungstag und Bekanntmachung des Hinweises auf die Patenterteilung: **03.11.2004**
(21) Anmeldenummer: 98105106.3
(22) Anmeldetag: 20.03.1998
(51) Int. Cl.: B60R 22/195

(54) **Schlossstraffer für ein Sicherheitsgurtsystem**
Buckle retractor for a safety belt system
Rétracteur de boucle pour un système de ceinture de sécurité

(30) Priorität: 04.04.1997 DE 29706024 U
(43) Veröffentlichungstag der Anmeldung: 07.10.1998
(73) Patentinhaber: TRW Automotive GmbH, 73553 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 685 372
- DE-A- 3 937 883
- DE-A- 4 137 028
- DE-A- 4 232 160
- DE-A- 19 543 393

## Beschreibung

Die Erfindung betrifft einen Schloßstraffer für ein Sicherheitsgurtsystem.

Ein Schloßstraffer bewegt den Schloßkopf im Rückhaltefall um ca. 50 bis 100 mm in Richtung des Verankerungspunktes des Schloßstraffers, um die Gurtlose aus dem Sicherheitsgurtsystem zu entfernen. Der Straffvorgang selbst erfolgt, da meist pyrotechnische Antriebseinheiten vorgesehen sind, schlagartig. In den Zwischenraum zwischen dem Schloßkopf und der Antriebseinrichtung dürfen dabei keinesfalls den Straffvorgang hindernde Teile, zum Beispiel im Fahrzeug transportierte Teile, hineinragen, da der Schloßkopf an diesem Teil anstoßen würde und er nicht um den gesamten Straffweg verschoben werden könnte. Eine Verletzungsgefahr für Fahrzeuginsassen besteht bei bekannten Schloßstraffern ferner für den in der Praxis zwar kaum vorkommenden, jedoch theoretisch nicht ausgeschlossenen Fall, daß Finger des Fahrzeuginsassen während des Straffvorgangs in den Zwischenraum zwischen Schloßkopf und Antriebseinrichtung ragen, die dann eingeklemmt werden würden.

Die DE-A-42 32 160 beschreibt einen Schloßstraffer für ein Sicherheitsgurtsystem, mit einem Schloßkopf, einer Antriebseinrichtung zum Verschieben des Schloßkopfes, die ein im Rückhaltefall angetriebenes Element aufweist, und einem Zugübertragungsmittel, das das angetriebene Element mit dem Schloßkopf verbindet, wobei ein den Zwischenraum zwischen Schloßkopf und Antriebseinrichtung abschirmendes und das Zugübertragungsmittel umgebendes Gehäuse vorgesehen ist, das beim Straffvorgang relativ zu dem Schloßkopf verschoben wird. Das massive Metallgehäuse dient als Führung für den Schloßkopf.

Eine ähnliche Ausführungsform mit einem zusätzlichen Faltenbalg zeigt die EP-A-0 685 372.

Die Erfindung schafft einen Schloßstraffer, bei dem sowohl die Unfallgefahr als auch die Gefahr, daß der Straffweg durch sich in den Zwischenraum zwischen Schloßkopf und Antriebseinrichtung erstreckende Teile begrenzt wird, ausgeschlossen ist. Dies wird durch einen Schloßstraffer nach Anspruch 1 gelöst. Das Gehäuse kann sehr einfach ausgeführt sein und ist zudem schnell montierbar. Der Schloßkopf und/oder die Antriebseinrichtung wandern, relativ gesehen, beim Straffvorgang in das Gehäuse. Das Gehäuse muß einerseits steif genug ausgebildet sein, um ein Zusammendrücken des Gehäuses durch den Insassen zu verhindern. Das Gehäuse ist aber andereizeits aus in gewissem begrenzten Maße elastisch nachgiebigem Material sein, das eine gewisse Biegung zuläßt. Dies ist zum Beispiel vorteilhaft, wenn das Zugübertragungsmittel flexibel ausgebildet ist, zum Beispiel als Zugseil, und die Lage des Gurtschlosses relativ zur Antriebseinrichtung nicht eindeutig festgelegt ist. Ein Faltenbalg, der von Haus aus relativ weich und flexibel ist, bildet z.B. kein Gehäuse im Sinne der Erfindung und keinen Schutz gegen Zugriff. Zudem hat er in den Zwischenraum hineinragende Falten, in die der Insasse greifen könnte.

Das Gehäuse kann ein langgestreckter, zylindrischer oder rohrförmiger Körper sein, der das Zugübertragungsmittel in Umfangsrichtung vollständig umgibt. Es wird vorzugsweise am Schloßkopf oder an der Antriebseinrichtung befestigt und über das jeweils andere der beiden Teile außenseitig gestülpt, so daß es entlang von dessen Außenoberfläche im Rückhaltefall verschoben werden kann.

Die Antriebseinrichtung, die vorzugsweise eine Kolben-Zylinder-Einheit ist, umfaßt einen Zylinder an dem außenseitig im Bereich des dem Schloßkopf zugewandten Endes eine Zündeinheit befestigt ist. Das Gehäuse ragt in axialer Richtung nicht nur teilweise über den Zylinder, sondern auch über die Zündeinheit.

Eine Ausgestaltung sieht nur vor, daß das Gehäuse nicht aus einem, sondern aus mehreren Gehäuseteilen besteht, die beim Straffvorgang teleskopartig ineinanderschiebbar sind. Das Gehäuse oder die Gehäuseteile können dabei auch einstückig am Schloßkopfgehäuse oder am Gehäuse der Antriebseinrichtung angeformt sein.

Bei einer Ausführungsform, bei der der Schloßstraffer in einem Fahrzeugsitz integriert ist und der Fahrzeugsitz eine seitliche Ausnehmung zur Aufnahme des Schloßstraffers aufweist, ist das Gehäuse schalenartig ausgebildet. Es muß, da es einerseits vom Fahrzeugsitz abgeschirmt ist, nicht mehr das Zugübertragungsmittel vollständig außenseitig umgeben, sondern nur den Bereich, der von außen frei zugänglich ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine erste Ausführungsform des erfindungsgemäßen Schloßstraffers in Frontansicht mit aufgeschnittenem Gehäuse,
Figur 2 eine Seitenansicht des Schloßstraffers nach Figur 1,
Figur 3 eine zweite Ausführungsform des erfindungsgemäßen Schloßstraffers mit auf Biegung beanspruchtem Zugübertragungsmittel,
Figur 4 eine Frontansicht auf einen Fahrzeugsitz mit integriertem, erfindungsgemäßem Schloßstraffer,
Figur 5 eine Querschnittsansicht durch einen Teil der Sitzfläche und durch den integrierten Gurtstraffer nach Figur 4,
Figur 6 eine Draufsicht auf die Sitzfläche des in Figur 4 gezeigten Fahrzeugsitzes im Bereich des Gurtstraffers,
Figur 7 eine dritte Ausführungsform des erfindungsgemäßen Schloßstraffers in Frontansicht mit aufgeschnittenem Gehäuse, und
Figur 8 eine Seitenansicht des Schloßstraffers nach Figur 7.

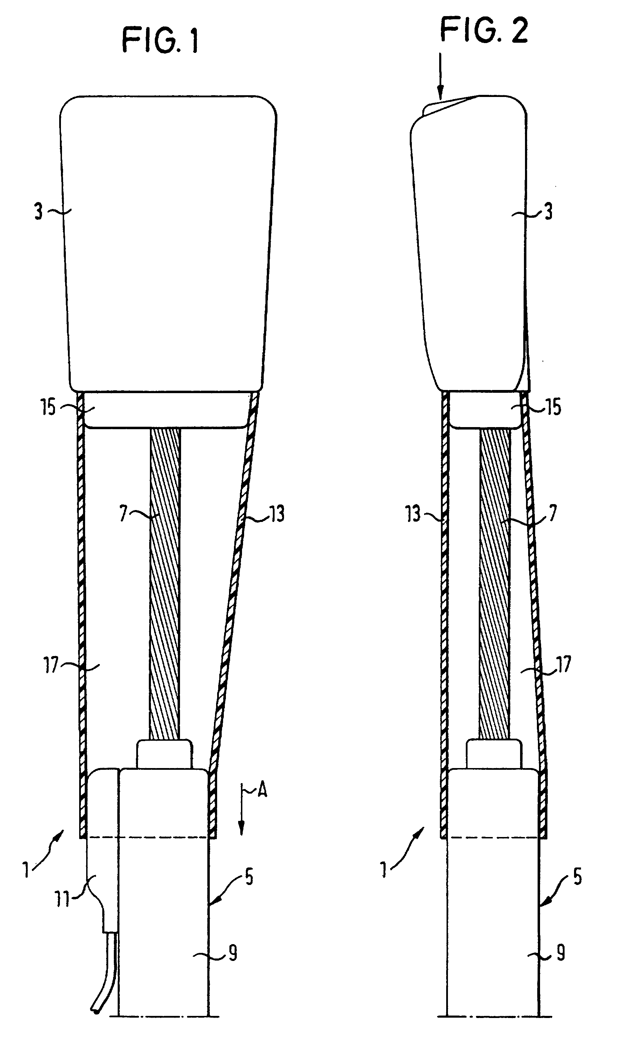

In Figur 1 ist ein Schloßstraffer 1 für ein Sicherheitsgurtsystem gezeigt, der einen Schloßkopf 3, von dem nur das Außengehäuse gezeigt ist, eine Antriebseinrichtung 5 in Form einer Kolben-Zylinder-Einheit sowie ein Zugübertragungsmittel 7 in Form eines Zugseils aufweist. Das Zugübertragungsmittel 7 verbindet den Schloßkopf 3 mit einem im Rückhaltefall angetriebenen Element, nämlich dem nicht näher gezeigten Kolben. An der Außenseite des Zylinders 9 ist eine Zündeinheit 11 befestigt, die dazu dient, im Rückhaltefall einen pyrotechnischen Treibsatz (nicht gezeigt) zu zünden. Das Zugübertragungsmittel 7 wird von einem Gehäuse 13 in Umfangsrichtung vollständig umgeben. Das Gehäuse 13, welches aus elastischem Kunststoff, zum Beispiel PE ist, ist dünnwandig und hat lediglich eine Dicke von 0,5 bis 0,7 mm, wodurch es eine gewisse Biegeelastizität erhält. Das Gehäuse 13 ist aber steif genug, damit es in montiertem Zustand nicht einfach zusammengedrückt werden kann. Ein am Außengehäuse des Schloßkopfes 3 im Bereich des der Antriebseinrichtung 5 zugewandten Endes ist ein Absatz 15 vorgesehen, auf den das Gehäuse 13 mit einer Preßpassung aufgesteckt ist. Die Geometrie des Gehäuses 13 im Bereich seines antriebsseitigen Endes, wo es über das dem Schloßkopf 3 zugewandten Ende der Antriebseinrichtung 5 und der Zündeinheit 11 gestülpt ist, ist der Außenkontur der Antriebseinrichtung 5 und der Zündeinheit 11 relativ exakt angepaßt. Jedoch ist ein minimales Spiel zwischen dem Gehäuse 13 und der Außenkontur von Antriebseinrichtung 5 und Zündeinheit 11 vorgesehen, die ein Verschieben des Gehäuses 13 in axialer Richtung, genauer gesagt in Richtung des Pfeiles A beim Straffvorgang ermöglicht.

Das als separates Teil ausgebildete Gehäuse 13 stellt eine Fortsetzung des Schloßkopfgehäuses bis über das dem Schloßkopf 3 zugewandte Ende des Zylinders 9 hinaus dar. Die am schloßkopfseitigen Ende des Gehäuses 13 dem Schloßkopfgehäuse angepaßte Kontur geht zum antriebsseitigen Ende hin in die Außenkontur von Antriebseinrichtung 5 und Zündeinheit 11 über, so daß der Schloßstraffer 1 nach außen hin eine geschlossene Außenkontur ohne deutliche Einbuchtungen oder Hinterschneidungen hat. Das Gehäuse 13 schirmt einen Zwischenraum 17 um das Zugübertragungsmittel 7 herum und zwischen dem Schloßkopf 3 und der Antriebseinrichtung 5 nach außen hin ab, so daß es ausgeschlossen ist, daß Teile, wie zu transportierende Teile, Kleidungsstücke oder sogar die Finger des Fahrzeuginsassen in diesen Zwischenraum 17 gelangen, in den sich der Schloßkopf 3 im Rückhaltefall hineinbewegt, wie dies z.B. bei Verwendung eines Faltenbalgs möglich wäre.

Wenn in einem Rückhaltefall die Zündeinheit 11 den Treibsatz zündet und der Kolben das Zugübertragungsmittel 7 und damit den Schloßkopf 3 nach unten bewegt, nimmt letzterer auch das Gehäuse 13 bei seiner Bewegung nach unten mit. Das Gehäuse 13 gleitet an der Außenoberfläche des Zylinders 9 und an der der Zündeinheit 11 ungehindert entlang, da auch keine vorstehenden Teile am Zylinder 9 oder der Zündeinheit 11 vorgesehen sind.

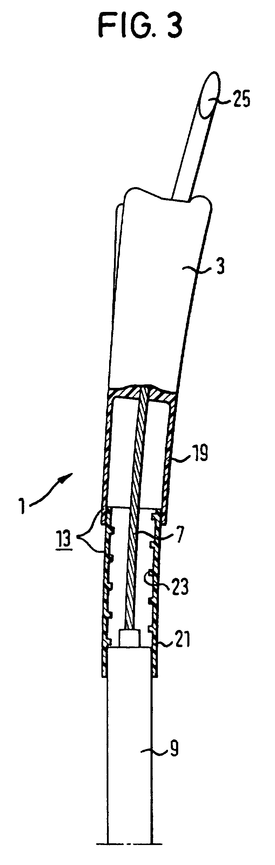

Bei der in Figur 3 dargestellten Ausführungsform ist das Gehäuse 13 aus zwei teleskopartig ineinander verschiebbaren Gehäuseteilen zusammengesetzt, wobei das obere Gehäuseteil 19 einen topfartigen Fortsatz des Schloßkopfgehäuses bildet, also einstückig mit dem Schloßkopfgehäuse verbunden ist. Das untere Gehäuseteil 21, das in das obere Gehäuseteil 19 hineinragt, ist fest mit dem Zylinder 9 verbunden und weist einen wendelförmig verlaufenden verdickten Bereich 23 sowie dazwischen Bereiche mit geringer Wandstärke auf, so daß insgesamt eine Biegeelastizität erreicht wird. Dies hat den Vorteil, daß sich die Gehäuseteile 19, 21 einem bogenförmigen Verlauf des Zugübertragungsmittels 7 anpassen können, wie es in Figur 3 angedeutet ist. Der Schloßkopf 3 wird bei eingeführter Steckzunge 25 in Richtung des Fahrzeuginsassen geneigt. Das Gehäuse 13 kann gegebenenfalls auch Ausnehmungen aufweisen, um ihm die notwendige Biegeelastizität zu geben.

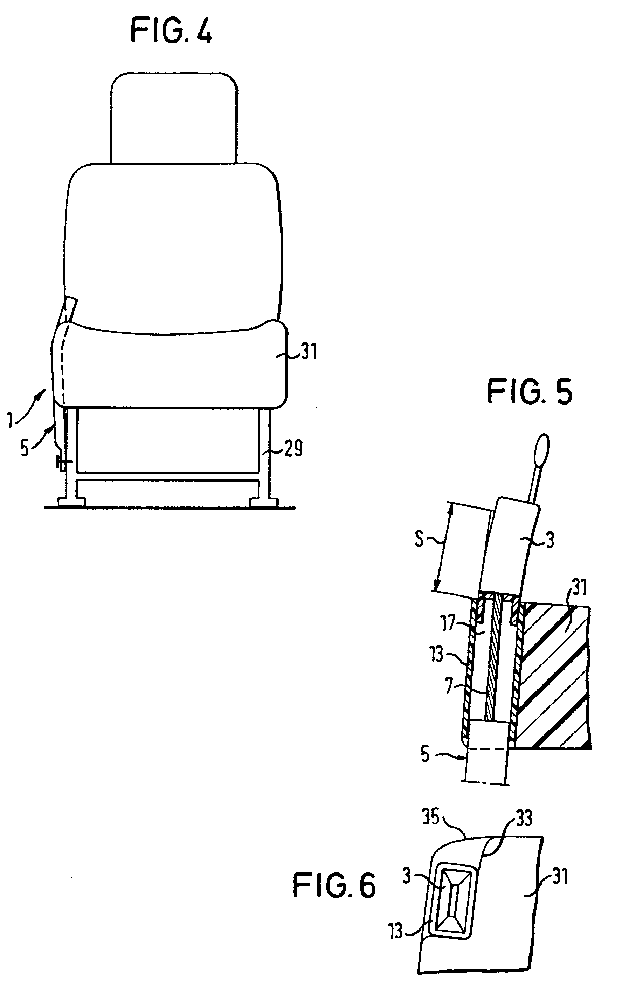

Bei der in den Figuren 4 bis 6 dargestellten Ausführungsform ist der Schloßstraffer 1 im Fahrzeugsitz integriert, und die Antriebseinrichtung 5 ist am Sitzrahmen 29 befestigt. Das Sitzteil 31 des Fahrzeugsitzes weist, wie Figur 6 zu entnehmen ist, an einer hinteren Ecke eine Ausnehmung auf, die so dimensioniert ist, daß der Schloßkopf 3 und das Gehäuse 13 seitlich nicht gegenüber dem Sitzteil 31 vorstehen. Das Gehäuse 13 kann als in Umfangsrichtung geschlossener Hohlkörper oder als Schale ausgeführt sein, die den Zwischenraum nach außen abschließt. Bei der in Figur 5 dargestellten Ausführungsform ist das Gehäuse 13 nicht am Schloßkopf 3 befestigt, sondern entweder am Sitzteil 31 oder an der Antriebseinrichtung 5. Der Schloßkopf 3 dringt beim Straffvorgang annähernd vollständig in den Zwischenraum 17 ein. Mit S ist der Straffweg bezeichnet.

Figur 6 zeigt zwei Ausführungsformen des Gehäuses 13, die sich durch unterschiedliche Außenkonturen voneinander unterscheiden. Einerseits ist es möglich, daß das Gehäuse 13 eine Wandung 33 aufweist, die entlang der Ausnehmung des Sitzteiles 31 verläuft, andererseits kann das Gehäuse 13 eine Wandung 35 haben, die an der dem Sitzteil 31 abgewandten Seite des Schloßstraffers verläuft und die Außenkontur des Sitzteiles 31 ohne die Ausnehmung für den Schloßstraffer beschreibt.

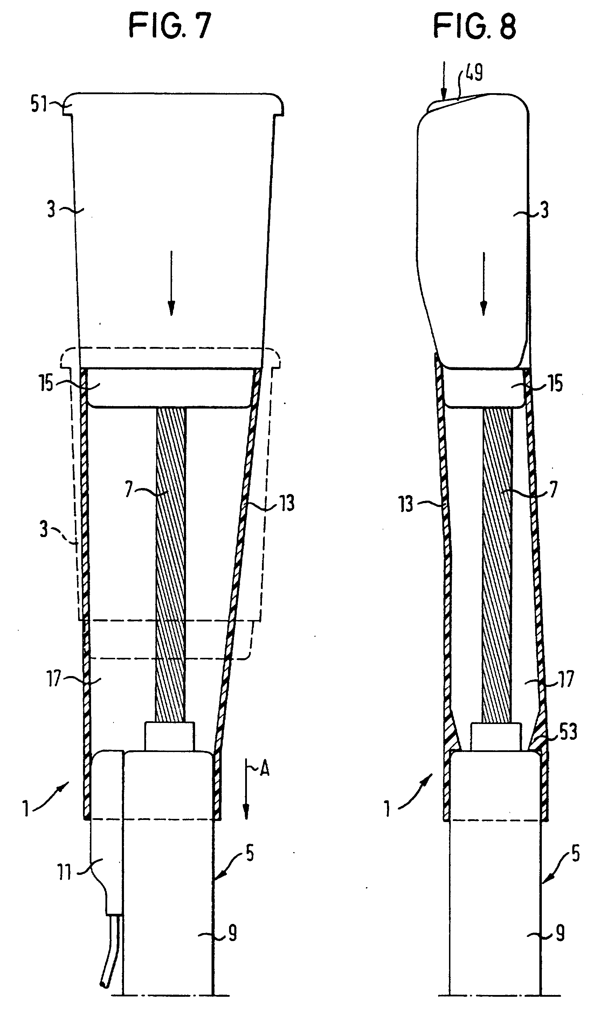

Bei der in den Figuren 7 und 8 gezeigten Ausführungsform taucht der Schloßkopf 3 im Rückhaltefall annähernd vollständig in das Gehäuse 13 ein, das sich dabei aufweitet. Die Stellung des Schloßkopfes 3 nach dem Straffvorgang ist mit unterbrochenen Linien angedeutet. Zwei gegenüberliegende, in Figur 8 zu erkennende innenseitige Vorsprünge 53 am Gehäuse 13 verhindern eine Relativbewegung des Gehäuses 13 zur Antriebseinrichtung im Rückhaltefall. Im Bereich seines oberen Endes sind am Schloßkopf 3 zwei entgegengesetzte seitlich abstehende Fortsätze 51 ausgebildet, mit denen der Schloßkopf 3 an der oberen Stirnfläche des Gehäuses 13 anschlägt. Die Fortsätze 51 verhindern, daß der Schloßkopf 3 zu tief in das Gehäuse 13 eintaucht und die Lösetaste 49 anschließend nicht mehr betätigt werden kann. Die Vorsprünge 53 können so ausgebildet sein, daß sie beim Auftreffen der Fortsätze 51 auf das Gehäuse 13 seitlich nachgeben und erst in der Endphase des Straffvorganges eine Relativbewegung des Gehäuses 13 zur Antriebseinrichtung 5 erlauben. Bei dieser Ausgestaltung verschieben sich entsprechend Schloßkopf 3 und Antriebseinrichtung 5 jeweils relativ zum Gehäuse 13.

Je nach Einbaulage kann das Gehäuse 13 in Umfangsrichtung teilweise offen sein.

## Patentansprüche

1. Schloßstraffer für ein Sicherheitsgurtsystem, mit einem Schloßkopf (3), einer Antriebseinrichtung (5) zum Verschieben des Schloßkopfes (3), die ein im Rückhaltefall angetriebenes Element aufweist, und einem Zugübertragungsmittel (7), das das angetriebene Element mit dem Schloßkopf (3) verbindet, wobei ein den Zwischenraum (17) zwischen Schloßkopf (3) und Antriebseinrichtung (5) abschirmendes und das Zugübertragungsmittel (7) umgebendes Gehäuse (13) vorgesehen ist, das beim Straffvorgang relativ zu dem Schloßkopf (3) und/oder der Antriebseinrichtung (5) verschoben wird und das quer zu seiner Längserstreckung elastisch gebogen werden kann.

2. Schloßstraffer nach Anspruch 1, **dadurch gekennzeichnet, daß** das Gehäuse (13) ein langgestreckter, rohrförmiger Körper ist, der das Zugübertragungsmittel (7) in Umfangsrichtung vollständig umgibt.

3. Schloßstraffer nach Anspruch 1 oder 2, **dadurch gekennzeichnet, daß** das Gehäuse (13) am Schloßkopf (3) oder der Antriebseinrichtung (5) befestigt ist, über das andere der beiden Teile außenseitig gestülpt ist und entlang von dessen Außenoberfläche im Rückhaltefall verschoben wird.

4. Schloßstraffer nach einem der vorstehenden Ansprüche, **dadurch gekennzeichnet, dass** der Schlosskopf (3) an seinem der Antriebseinrichtung (5) zugewandten Ende einen Absatz (15) aufweist, auf den das Gehäuse (13) aufgeschoben ist.

5. Schloßstraffer nach einem der Ansprüche 1 bis 3, **dadurch gekennzeichnet, daß** der Schloßkopf (3) wenigstens einen seitlich abstehenden Fortsatz (51) unterhalb der Lösetaste (49) aufweist, bis zu welchem der Schloßkopf (3) im Rückhaltefall in das Gehäuse (13) eintauchen kann.

6. Schloßstraffer nach einem der vorstehenden Ansprüche, **dadurch gekennzeichnet, daß** das Gehäuse (13) wenigstens einen auf seiner Innenseite abstehenden Vorsprung (53) aufweist, der eine Relativbewegung zum Schloßkopf (3) oder zur Antriebseinrichtung (5) verhindert.

7. Schloßstraffer nach einem der vorstehenden Ansprüche, **dadurch gekennzeichnet, daß** die Antriebseinrichtung (5) eine Kolben-Zylinder- Einheit ist, an deren Zylinder (9) außenseitig im Bereich des dem Schloßkopf (3) zugewandten Endes eine Zündeinheit (11) befestigt ist, und daß das Gehäuse (13) zumindest teilweise über den Zylinder (9) und die Zündeinheit (11) gestülpt ist.

8. Schloßstraffer nach einem der vorstehenden Ansprüche, **dadurch gekennzeichnet, daß** das Gehäuse (13) Bereiche mit gegenüber dem übrigen Teil des Gehäuses (13) verringerter Wandstärke hat.

9. Schloßstraffer nach einem der vorstehenden Ansprüche, **dadurch gekennzeichnet, daß** das Gehäuse (13) ein topfartiger Fortsatz des Schloßkopfgehäuses ist.

10. Schloßstraffer nach einem der vorstehenden Ansprüche, **dadurch gekennzeichnet, daß** das Gehäuse (13) aus mehreren Gehäuseteilen (19, 21) besteht, die beim Straffvorgang teleskopartig ineinander geschoben werden.

11. Schloßstraffer nach Anspruch 10, **dadurch gekennzeichnet, daß** ein Gehäuseteil (19) am Schloßkopf (3) und ein anderes an der Antriebseinrichtung (5) befestigt sind.

12. Schloßstraffer nach einem der vorstehenden Ansprüche, **dadurch gekennzeichnet, daß** der Schloßstraffer (1) in einen Fahrzeugsitz integriert ist, wobei das Sitzteil (31) des Fahrzeugsitzes eine seitliche Ausnehmung zur Aufnahme des Schloßstraffers (1) aufweist.

13. Schloßstraffer nach Anspruch 12, **dadurch gekennzeichnet, daß** das Gehäuse (13) schalenartig ausgebildet ist und den Schloßstraffer (1) im Bereich des Zugübertragungsmittels (7) auf der dem Sitzteil (31) abgewandten Seite umgibt.

## Claims

1. A buckle tensioner for a safety belt system, with a buckle head (3), a drive device (5) for displacing the buckle head (3), the drive device (5) having an element which is driven in a case of restraint, and with a traction transfer means (7) connecting the driven element to the buckle head (3), a housing (13) being provided which shields the intermediate space (17) between the buckle head (3) and the drive device (5) and surrounds the traction transfer means (7), the housing being displaced in relation to the buckle head (3) and/or to the drive device (5) during the tensioning process and being able to be elastically bent transversely to its longitudinal extent.

2. The buckle tensioner according to claim 1, **characterized in that** the housing (13) is an elongated tubular body which completely surrounds the traction transfer means (7) in the circumferential direction.

3. The buckle tensioner according to claim 1 or 2, **characterized in that** the housing (13) is fastened to the buckle head (3) or to the drive device (5), is slipped onto the other of the two parts on the outer side and is displaced along the outer surface thereof in a case of restraint.

4. The buckle tensioner according to any of the preceding claims, **characterized in that** the buckle head (3) has at its end facing the drive device (5) a shoulder (15) onto which the housing (13) is pushed.

5. The buckle tensioner according to any of claims 1 to 3, **characterized in that** the buckle head (3) has at least one laterally protruding extension (51) beneath the release button (49), up to which the buckle head (3) can plunge into the housing (13) in a case of restraint.

6. The buckle tensioner according to any of the preceding claims, **characterized in that** the housing (13) has at least one projection (53) protruding on its inner side, which prevents a movement relative to the buckle head (3) or to the drive device (5).

7. The buckle tensioner according to any of the preceding claims, **characterized in that** the drive device (5) is a piston/cylinder unit, on the cylinder (9) of which an ignition unit (11) is fastened externally in the region of the end facing the buckle head (3), and that the housing (13) is at least partially slipped over the cylinder (9) and the ignition unit (11).

8. The buckle tensioner according to any of the preceding claims, **characterized in that** the housing (13) has regions with a reduced wall thickness compared with the remaining part of the housing (13).

9. The buckle tensioner according to any of the preceding claims, **characterized in that** the housing (13) is a pot-like extension of the buckle head housing.

10. The buckle tensioner according to any of the preceding claims, **characterized in that** the housing (13) consists of several housing parts (19, 21), which are telescoped into each other during the tensioning process.

11. The buckle tensioner according to claim 10, **characterized in that** a housing part (19) is fastened to the buckle head (3) and another housing part is fastened to the drive device (5).

12. The buckle tensioner according to any of the preceding claims, **characterized in that** the buckle tensioner (1) is integrated in a vehicle seat, the seat part (31) of the vehicle seat having a lateral recess to receive the buckle tensioner (1).

13. The buckle tensioner according to claim 12, **characterized in that** the housing (13) is configured like a shell and surrounds the buckle tensioner (1) in the region of the traction transfer means (7) on the side facing away from the seat part (31).

## Revendications

1. Tensionneur de serrure pour un système de ceinture de sécurité, comportant une tête de serrure (3), un dispositif d'entraînement (5) pour déplacer la tête de serrure (3), lequel présente un élément mené en cas de retenue, et un moyen de transmission de traction (7) qui relie l'élément mené à la tête de serrure (3), un boîtier (13) étant prévu, protégeant l'espace intermédiaire (17) entre la tête de serrure (3) et le dispositif d'entraînement (5) et entourant le moyen de transmission de traction (7), lequel boîtier est déplacé lors de l'opération de tension par rapport à la tête de serrure (3) et/ou par rapport au dispositif d'entraînement (5) et peut être plié de manière élastique transversalement à son extension longitudinale.

2. Tensionneur de serrure selon la revendication 1, **caractérisé en ce que** le boîtier (13) est un corps tubulaire allongé qui entoure entièrement le moyen de transmission de traction (7) en direction périphérique.

3. Tensionneur de serrure selon la revendication 1 ou 2, **caractérisé en ce que** le boîtier (13) est fixé sur la tête de serrure (3) ou sur le dispositif d'entraînement (5), retourné du côté extérieur sur l'autre des deux pièces et, en cas de retenue, est déplacé le long de sa surface extérieure.

4. Tensionneur de serrure selon l'une des revendications précédentes, **caractérisé en ce que** la tête de serrure (3) présente à son extrémité tournée vers le dispositif d'entraînement (5) un talon (15) sur lequel est enfilé le boîtier (13).

5. Tensionneur de serrure selon l'une des revendications 1 à 3, **caractérisé en ce que** la tête de serrure (3) présente au moins un prolongement (51) faisant saillie latéralement au-dessous de la touche de déclenchement (49), jusqu'auquel la tête de serrure (3) peut plonger dans le boîtier (13) en cas de retenue.

6. Tensionneur de serrure selon l'une des revendications précédentes, **caractérisé en ce que** le boîtier (13) présente au moins un épaulement (53) faisant saillie sur sa face intérieure, lequel empêche un mouvement relatif vers la tête de serrure (3) ou vers le dispositif d'entraînement (5).

7. Tensionneur de serrure selon l'une des revendications précédentes, **caractérisé en ce que** le dispositif d'entraînement (5) est une unité à piston et cylindre, sur le cylindre (9) de laquelle une unité d'amorçage (11) est fixée sur le côté extérieur dans la région de l'extrémité tournée vers la tête de serrure (3), et **en ce que** le boîtier (13) est retourné au moins partiellement sur le cylindre (9) et sur l'unité d'amorçage (11).

8. Tensionneur de serrure selon l'une des revendications précédentes, **caractérisé en ce que** le boîtier (13) a des régions avec une épaisseur de paroi réduite par rapport à la partie restante du boîtier (13).

9. Tensionneur de serrure selon l'une des revendications précédentes, **caractérisé en ce que** le boîtier (13) est un prolongement en forme de pot du boîtier de la tête de serrure.

10. Tensionneur de serrure selon l'une des revendications précédentes, **caractérisé en ce que** le boîtier (13) est constitué par plusieurs parties de boîtier (19, 21) qui s'emboîtent l'une dans l'autre de façon télescopique lors de l'opération de tension.

11. Tensionneur de serrure selon la revendication 10, **caractérisé en ce qu'**une partie de boîtier (19) est fixée sur la tête de serrure (3) et une autre est fixée sur le dispositif d'entraînement (5).

12. Tensionneur de serrure selon l'une des revendications précédentes, **caractérisé en ce que** le tensionneur de serrure (1) est intégré dans un siège de véhicule, la partie de siège (31) du siège de véhicule présentant un évidement latéral pour recevoir le tensionneur de serrure (1).

13. Tensionneur de serrure selon la revendication 12, **caractérisé en ce que** le boîtier (13) est réalisé en forme de coque et entoure le tensionneur de serrure (1) dans la région du moyen de transmission de traction (7) sur le côté détourné de la partie de siège (31).
